(19)

Europäisches
Patentamt
European
Patent Office
Office européen
des brevets

(11) **EP 2 083 093 A1**

(12) **EUROPEAN PATENT APPLICATION**
published in accordance with Art. 153(4) EPC

(43) Date of publication:
**29.07.2009 Bulletin 2009/31**

(21) Application number: **07829377.6**

(22) Date of filing: **02.10.2007**

(51) Int Cl.:
*C22C 9/00* *(2006.01)*  *C22C 9/01* *(2006.01)*
*C22C 9/02* *(2006.01)*  *C22C 9/04* *(2006.01)*
*C22F 1/00* *(2006.01)*  *C22F 1/08* *(2006.01)*

(86) International application number:
**PCT/JP2007/069639**

(87) International publication number:
**WO 2008/041777 (10.04.2008 Gazette 2008/15)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **04.10.2006 JP 2006272714**

(71) Applicant: **SUMITOMO LIGHT METAL
INDUSTRIES, LTD.
Tokyo105-8601 (JP)**

(72) Inventor: **ANDO, Tetsuya
Tokyo 105-8601 (JP)**

(74) Representative: **Müller-Boré & Partner
Patentanwälte
Grafinger Strasse 2
81671 München (DE)**

(54) **COPPER ALLOY FOR SEAMLESS PIPES**

(57)     A seamless pipe copper alloy includes Zr and at least one of Al, Sn, and Zn, with the balance being Cu and unavoidable impurities, the Al content, the Sn content, the Zn content, and the Zr content of the copper alloy satisfying the expressions $0.05 \leq A+B+C$, $0.01 \leq D \leq 0.5$, and $0.25 \leq A+B+C+D \leq 0.8$ (wherein A represents the Al content (mass%), B represents the Sn content (mass%), C represents the Zn content (mass%), and D represents the Zr content (mass%)). The seamless pipe copper alloy exhibits excellent workability, high strength, and high thermal conductivity. The seamless pipe copper alloy also shows only a small decrease in strength due to brazing.

EP 2 083 093 A1

**Description**

TECHNICAL FIELD

The present invention relates to a seamless pipe copper alloy used for heat exchanger pipes or refrigerant pipes of heat exchangers for air conditioners, refrigerators, and the like.

BACKGROUND ART

Seamless pipes have been widely used as heat exchanger pipes or refrigerant pipes of heat exchangers for air conditioners (e.g., room air conditioners and packaged air conditioners), refrigerators, and the like.

A seamless pipe is produced by melting and casting given components to obtain a billet, hot-extruding the billet using a mandrel, and subjecting the extruded product to cold working (e.g., rolling or drawing) to reduce the thickness of the extruded product to obtain a product having given dimensions.

The seamless pipe may be cold-roll-formed to form a helical groove in the inner surface of the seamless pipe in order to improve the heat-exchange performance. It is very important to ensure cold roll formability from the viewpoint of the alloy design.

A phosphorous-deoxidized copper tube (JIS C1220T) that has well-balanced characteristics (e.g., strength, workability, and thermal conductivity) and cost has been used as the seamless pipe.

In recent years, since a reduction in weight and cost of heat exchangers has been desired, it has become necessary to reduce the thickness of the seamless pipe.

On the other hand, a pipe material has been desired to exhibit high reliability from the viewpoint of an increase in refrigerant pressure accompanying a change in refrigerant and suppression of emission of refrigerant gas (greenhouse gas).

Specifically, a pipe material that exhibits high reliability even if the thickness is reduced has been desired. Therefore, a copper alloy is desired to exhibit excellent workability and high strength. Since a copper alloy is used as the raw material for heat exchanger pipes and refrigerant pipes, high thermal conductivity is also desired.

However, when the thickness of a phosphorous-deoxidized copper pipe is reduced in order to reduce the weight and cost of the pipe, the compressive strength decreases to a large extent so that the reliability of the pipe deteriorates. Therefore, it is difficult to achieve a reduction in thickness and an increase in reliability in combination.

A refrigerant heat exchanger pipe is also desired to show only a small decrease in strength due to brazing. Specifically, since the heat exchanger pipe is subjected to a high temperature of 800˚C or more during assembly depending on the type of heat exchanger, the heat exchanger pipe is desired to show only a small change in strength before and after brazing.

However, since phosphorous-deoxidized copper undergoes grain growth when subjected to a high temperature, the strength and ductility decrease due to the grain growth. This phenomenon decreases the reliability.

As an alloy that enables a reduction in thickness and an increase in reliability or prevents a decrease in strength due to brazing, a precipitation-hardening alloy and a solid-solution hardening alloy have been proposed.

As the precipitation-hardening alloy, Patent Document 1 discloses a copper alloy that contains 0.02 to 0.2 wt% of Co and 0.01 to 0.05 wt% of P with the balance being Cu and unavoidable impurities, wherein the content of oxygen contained as unavoidable impurities is adjusted to 50 ppm or less, and Patent Document 2 discloses a copper alloy that is used for a brazed heat exchanger, has a high recrystallization temperature and high conductivity, and contains 0.1 to 0.3 wt% of chromium, for example. As the solid-solution hardening alloy, Patent Document 3 discloses a copper alloy that contains 0.1 to 1.0 mass% of Sn, 0.005 to 0.1 mass% of P, 0.005 mass% or less of O, and 0.0002 mass% or less of H with the balance being Cu and unavoidable impurities, wherein the alloy has an average grain size of 30 $\mu$m or less.
(Patent Document 1) JP-A-2000-1728 (claim 1)
(Patent Document 2) JP-A-10-168531 (claim 1)
(Patent Document 3) JP-A-2003-268467 (claim 1)

However, since it is difficult to provide the copper alloys disclosed in Patent Documents 1 to 3 with excellent workability and high strength, these copper alloys exhibit insufficient reliability when the thickness of the product is reduced.

Specifically, a decrease in strength of a refrigerant heat exchanger pipe due to brazing can be suppressed by solid-solution hardening. However, since the ductility decreases due to solid-solution hardening, the workability deteriorates. Moreover, the thermal conductivity decreases due to solid-solution hardening. When the thickness of the product is reduced to provide thermal conductivity, the strength of the product decreases to a large extent. A decrease in strength due to brazing can also be suppressed by precipitation hardening. However, since precipitated elements are re-dissolved depending on the brazing temperature, a sufficient strength cannot be achieved. Moreover, grain growth is further promoted by re-dissolution.

Accordingly, an object of the present invention is to provide a seamless pipe copper alloy that exhibits excellent workability, high strength, and high thermal conductivity. Another object of the present invention is to provide a seamless pipe copper alloy that exhibits excellent workability, high strength, high thermal conductivity, and only a small decrease in strength due to brazing.

Patent Document 4 discloses a copper alloy that contains at least one element selected from Fe, Cr, Mn, Ni, Ag, Zn, Sn, Al, Si, Pb, Mg, Te, Zr, B, and Ti in an amount of 0.01 to 0.5 wt% with the balance being Cu and unavoidable impurities. However, the copper alloy disclosed in Patent Document 4 is a copper alloy for a welded tube. (Patent Document 4) JP-A-6-58688 (claim 1)

DISCLOSURE OF THE INVENTION

The inventors of the present invention conducted extensive studies in order to solve the above-described problems. As a result, the inventors found that (1) a copper alloy that exhibits excellent workability and high strength and (2) a copper alloy that exhibits only a small decrease in strength due to brazing can be obtained by adding given elements to a copper alloy in given amounts. This finding has led to the completion of the present invention.

Specifically, the present invention provides (1) a seamless pipe copper alloy comprising Zr and at least one of Al, Sn, and Zn, with the balance being Cu and unavoidable impurities, the Al content, the Sn content, the Zn content, and the Zr content of the seamless pipe copper alloy satisfying the following expressions (1), (2), and (3),

$$0.05 \leq A+B+C \qquad (1)$$

$$0.01 \leq D \leq 0.5 \qquad (2)$$

$$0.25 \leq A+B+C+D \leq 0.8 \qquad (3)$$

wherein A represents the Al content (mass%), B represents the Sn content (mass%), C represents the Zn content (mass%), and D represents the Zr content (mass%).

The present invention provides (2) the seamless pipe copper alloy according to (1), the seamless pipe copper alloy further comprising at least one of Fe, Ni, Cr, and Co and having a total content of Fe, Ni, Cr, and Co of 0.1 mass% or less.

The present invention provides (3) the seamless pipe copper alloy according to (1) or (2), the seamless pipe copper alloy having a P content of 0.004 to 0.04 mass%.

Since the seamless pipe copper alloy according to the present invention exhibits excellent workability, high strength, and high thermal conductivity, a highly reliable seamless pipe having a small thickness can be produced. Since the seamless pipe copper alloy according to the present invention exhibits excellent workability, high strength, high thermal conductivity, and a small decrease in strength due to brazing, a highly reliable seamless pipe that has a small thickness and shows a small decrease in strength due to brazing can be produced.

BEST MODE FOR CARRYING OUT THE INVENTION

The seamless pipe copper alloy according to the present invention includes Zr and at least one of Al, Sn, and Zn, with the balance being Cu and unavoidable impurities, the Al content, the Sn content, the Zn content, and the Zr content of the copper alloy satisfying the following expressions (1), (2), and (3).

$$0.05 \leq A+B+C \qquad (1)$$

$$0.01 \leq D \leq 0.5 \qquad (2)$$

$$0.25 \leq A+B+C+D \leq 0.8 \qquad (3)$$

wherein A represents the Al content (mass%), B represents the Sn content (mass%), C represents the Zn content (mass%), and D represents the Zr content (mass%).

The seamless pipe copper alloy according to the present invention includes at least one of Al, Sn, and Zn that improve the strength of the copper alloy through solid-solution hardening. Since these elements can be alloyed at a relatively low temperature, these elements are advantageous from the viewpoint of production.

The seamless pipe copper alloy according to the present invention includes Zr that improves the strength of the copper alloy through precipitation hardening. When the brazing temperature is moderate, Zr precipitates and suppresses an increase in crystal grain size to reduce a decrease in strength.

Specifically, the seamless pipe copper alloy according to the present invention includes Zr and at least one of Al, Sn, and Zn as essential elements.

The Al content, the Sn content, the Zn content, and the Zr content of the seamless pipe copper alloy according to the present invention satisfy the following expressions (1), (2), and (3).

$$0.05 \leq A+B+C \qquad (1)$$

$$0.01 \leq D \leq 0.5 \qquad (2)$$

$$0.25 \leq A+B+C+D \leq 0.8 \qquad (3)$$

wherein A represents the Al content (mass%), B represents the Sn content (mass%), C represents the Zn content (mass%), and D represents the Zr content (mass%).

When the seamless pipe copper alloy according to the present invention does not include at least one of Al, Sn, and Zn, the content (A, B, or C) of at least one element that is not included in the seamless copper alloy according to the present invention is zero in the expressions (1) and (3).

The value "A+B+C" (i.e., the total content of Al, Sn, and Zn) is 0.05 mass% or more. If the value "A+B+C" is less than 0.05 mass%, the strength of the copper alloy decreases.

The value D (i.e., Zr content) is 0.01 to 0.5 mass%. If the value D is less than 0.01 mass%, the strength of the copper alloy decreases. Moreover, the effect of suppressing an increase in crystal grain size is reduced so that a decrease in strength due to brazing increases. If the value D is more than 0.5 mass%, precipitation hardening occurs to a large extent so that the workability deteriorates.

The value "A+B+C+D" (i.e., the total content of Al, Sn, Zn, and Zr) is 0.8 mass% or less. If the value "A+B+C+D" is more than 0.8 mass%, the workability of the copper alloy deteriorates as compared with phosphorous-deoxidized copper. As a result, it is difficult or impossible to form a groove in the inner surface of the tube (copper alloy). Moreover, the thermal conductivity of the copper alloy decreases. The value "A+B+C+D" is 0.25 mass% or more. If the value "A+B+C+D" is less than 0.25 mass%, a sufficient strength cannot be obtained.

In the seamless pipe copper alloy according to the present invention, the Al content, the Sn content, the Zn content, and the Zr content must satisfy the expressions (1), (2), and (3).

The seamless pipe copper alloy according to present invention preferably includes at least one of Fe, Ni, Cr, and Co in an amount of 0.1 mass% or less, and more preferably 0.05 mass% or less. In this case, it is unnecessary to control these elements during melting and casting without impairing the workability. Moreover, mixing of these elements into the raw material as impurities can be advantageously managed, for example. In addition, the effect of improving the strength of the copper alloy and the effect of suppressing an increase in crystal grain size are improved. If the total content of Fe, Ni, Cr, and Co is too high, the workability may deteriorate. Therefore, the total content of Fe, Ni, Cr, and Co is preferably 0.1 mass% or less.

The seamless pipe copper alloy according to the present invention preferably has a P content of 0.004 to 0.04 mass%, and more preferably 0.015 to 0.030 mass%. If the seamless pipe copper alloy according to the present invention has a P content of 0.004 or more, the material has been sufficiently deoxidized. If the P content of the seamless pipe copper alloy according to the present invention is too high, the thermal conductivity of the copper alloy decreases.

Therefore, the P content of the seamless pipe copper alloy according to the present invention is preferably 0.040 mass% or less.

The seamless pipe copper alloy according to the present invention is produced by melting and casting raw materials to obtain a billet that contains given elements in given amounts, and subjecting the billet to homogenization, hot extrusion, cold working (e.g., rolling or drawing), and aging. When producing a heat exchanger pipe, the copper alloy may be cold-roll-formed after drawing to form a helical groove in the inner surface of the pipe. Note that process annealing, solution heat treatment, or quenching may be performed during the above-mentioned process, if necessary.

In the casting step, copper metal and metal containing each element of the seamless pipe copper alloy according to the present invention, or an alloy of copper and each element of the seamless pipe copper alloy are mixed so that the seamless pipe copper alloy according to the present invention contains each element in a given amount. The mixture is cast into a billet using a high-frequency melting furnace or the like.

Since Zr is an active metal and is subjected to an oxidation loss during melting, it is necessary to adjust the amount of each element taking account of the oxidation loss of Zr during melting.

In the casting step, since the fluidity of the molten metal increases due to the addition of P, the castability of the molten metal increases. Therefore, defects (e.g., gas hole) that may occur during casting can be suppressed. Moreover, since P has a deoxidation effect, the oxidation loss of Zr during melting can be reduced. If a large amount of P is mixed, the P content of the copper alloy increases to a large extent so that the thermal conductivity decreases. Therefore, it is preferable to mix P so that the P content of the copper alloy is 0.004 to 0.040 mass%, and particularly preferably 0.015 to 0.030 mass%.

The billet obtained by the casting step is homogenized at a given temperature, and hot-extruded. The billet is heated before hot extrusion. Note that the billet heated during homogenization may be directly hot-extruded. The billet is hot-extruded using a mandrel. Specifically, the billet is hot-extruded in a state in which a mandrel is inserted into a hole formed in the billet by cold working or hot working before extrusion to obtain a seamless extruded pipe.

The seamless extruded pipe obtained by hot extrusion is cooled, and subjected to cold working (e.g., rolling or drawing) to reduce the outer diameter and the thickness of the seamless extruded pipe.

After quenching and optional cold working (e.g., drawing or roll forming), the resulting product is subjected to aging by heating the product at 400 to 700˚C, followed by cooling.

Since the seamless pipe copper alloy according to the present invention includes specific elements (i.e., Zr and at least one of Al, Sn, and Zn) in amounts within specific ranges, the balance between solid-solution hardening and precipitation hardening can be improved, so that the strength of copper alloy can be improved without impairing workability and thermal conductivity. Moreover, a decrease in strength due to brazing can be reduced.

The present invention is further described below by way of examples. Note that the present invention is not limited to the following examples.

(Examples)

(Production of copper alloy)

Alloy components shown in Table 1 were mixed using Cu metal, Al metal, Sn metal, Zn metal, Cu-Zr master alloy, Cu-P master alloy, Cu-Fe master alloy, Cu-Ni master alloy, Cu-Cr master alloy, and Cu-Co master alloy. The mixture was cast into an ingot (diameter: 100 mm) using a high-frequency melting furnace. After reducing the diameter of the ingot to 90 mm, the ingot was hot-extruded to obtain a pipe (diameter: 20 mm, thickness: 1.5 mm). The pipe was heated in a furnace at 900˚C, and was then immediately cooled in a water bath. After drawing the pipe to a diameter of 20 mm and a thickness of 1.5 mm, the pipe was heated at 500 to 750˚C for 0.5 to 2 hours to obtain a copper alloy (copper alloys 1 to 6 and 20 to 35).

(Evaluation of mechanical characteristics)

The 0.2% proof stress, the tensile strength, and the elongation of the copper alloy were measured in accordance with JIS Z 2241. The results are shown in Table 2. The 0.2% proof stress, the tensile strength, and the elongation of phosphorous-deoxidized copper C1220 were also measured as indices for evaluating the copper alloy.

(Evaluation of workability)

The workability of the copper alloy was tested by a conical plug expansion test. A case where cracks did not occur after the copper alloy was expanded to 3R was evaluated as "Good", and a case where cracks occurred was evaluated as "Bad". The results are shown in Table 2. The workability of phosphorous-deoxidized copper C1220 was also measured as an index for evaluating the copper alloy.

(Comparative Examples)

(Production of copper alloy)

Alloys 7 to 14 and 40 to 51 were obtained in the same manner as in the examples, except that the components were changed as shown in Table 1.

(Evaluation of mechanical characteristics and workability)

The mechanical characteristics and the workability of the alloys 7 to 14 and 40 to 51 were evaluated in the same manner as in the examples. The results are shown in Table 2.

TABLE 1

| Copper alloy No. | Cu | A Al | B Sn | C Zn | D Zr | | E P | F Fe | G Ni | H Cr | I Co | A+B+C | | A+B+C+D | | F+G+H+I |
|---|---|---|---|---|---|---|---|---|---|---|---|---|---|---|---|---|
| 1 | Bal. | 0.11 | - | 0.02 | 0.15 | ○ | 0.022 | - | - | - | - | ○ | 0.130 | ○ | 0.280 | 0.00 |
| 2 | Bal. | - | - | 0.44 | 0.06 | ○ | 0.024 | 0.04 | - | - | - | ○ | 0.440 | ○ | 0.500 | 0.04 |
| 3 | Bal. | 0.04 | 0.22 | - | 0.5 | ○ | 0.013 | - | - | - | - | ○ | 0.260 | ○ | 0.760 | 0.00 |
| 4 | Bal. | - | 0.03 | 0.19 | 0.08 | ○ | 0.021 | 0.07 | - | - | - | ○ | 0.220 | ○ | 0.300 | 0.07 |
| 5 | Bal. | 0.47 | - | - | 0.07 | ○ | 0.009 | - | - | - | - | ○ | 0.470 | ○ | 0.540 | 0.00 |
| 6 | Bal. | 0.02 | 0.12 | 0.02 | 0.38 | ○ | 0.016 | 0.01 | - | - | - | ○ | 0.160 | ○ | 0.540 | 0.01 |
| 7 | Bal. | 0.009 | - | - | 0.01 | ○ | 0.022 | - | - | - | - | × | 0.009 | × | 0.019 | 0.00 |
| 8 | Bal. | 0.03 | 0.51 | 0.01 | 0.31 | ○ | 0.033 | 0.05 | - | - | - | ○ | 0.550 | × | 0.860 | 0.05 |
| 9 | Bal. | - | 0.009 | - | 0.01 | ○ | 0.019 | - | - | - | - | × | 0.009 | × | 0.019 | 0.00 |
| 10 | Bal. | - | - | 0.009 | 0.01 | ○ | 0.024 | - | - | - | - | × | 0.009 | × | 0.019 | 0.00 |
| 11 | Bal. | 0.51 | 0.02 | 0.05 | 0.45 | ○ | 0.018 | 0.03 | - | - | - | ○ | 0.580 | × | 1.030 | 0.03 |
| 12 | Bal. | 0.01 | 0.05 | 0.51 | 0.38 | ○ | 0.027 | 0.04 | - | - | - | ○ | 0.570 | × | 0.950 | 0.04 |
| 13 | Bal. | - | - | 0.05 | 0.009 | × | 0.036 | - | - | - | - | ○ | 0.050 | × | 0.059 | 0.00 |
| 14 | Bal. | 0.50 | 0.03 | 0.04 | 0.51 | × | 0.034 | 0.03 | - | - | - | ○ | 0.570 | × | 1.080 | 0.03 |
| 20 | Bal. | - | 0.06 | 0.01 | 0.48 | ○ | 0.005 | - | - | - | - | ○ | 0.070 | ○ | 0.550 | - |
| 21 | Bal. | - | 0.02 | 0.13 | 0.50 | ○ | 0.012 | - | - | - | - | ○ | 0.150 | ○ | 0.650 | 0.06 |
| 22 | Bal. | - | 0.06 | 0.01 | 0.38 | ○ | 0.017 | - | - | - | - | ○ | 0.070 | ○ | 0.450 | - |
| 23 | Bal. | - | 0.06 | 0.01 | 0.20 | ○ | 0.018 | - | - | - | - | ○ | 0.070 | ○ | 0.270 | - |
| 24-1 | Bal. | - | 0.05 | 0.25 | 0.25 | ○ | 0.023 | - | - | - | - | ○ | 0.300 | ○ | 0.550 | - |
| 25 | Bal. | 0.01 | 0.02 | 0.37 | 0.35 | ○ | 0.011 | - | 0.01 | - | - | ○ | 0.400 | ○ | 0.750 | 0.01 |
| 26 | Bal. | 0.40 | 0.01 | 0.01 | 0.33 | ○ | 0.009 | - | - | 0.01 | - | ○ | 0.420 | ○ | 0.750 | 0.01 |
| 27-1 | Bal. | 0.02 | 0.45 | 0.01 | 0.30 | ○ | 0.020 | - | - | - | - | ○ | 0.480 | ○ | 0.780 | 0.00 |
| 28 | Bal. | 0.70 | 0.02 | 0.01 | 0.04 | ○ | 0.030 | - | 0.05 | 0.01 | - | ○ | 0.730 | ○ | 0.770 | 0.06 |
| 29 | Bal. | 0.01 | 0.47 | 0.02 | 0.04 | ○ | 0.015 | 0.02 | - | - | 0.02 | ○ | 0.500 | ○ | 0.540 | 0.04 |

| Copper alloy No. | Cu | A — Al | B — Sn | C — Zn | D — Zr | D — Zr | E — P | F — Fe | G — Ni | H — Cr | I — Co | A+B+C | A+B+C | A+B+C+D | A+B+C+D | F+G+H+I |
|---|---|---|---|---|---|---|---|---|---|---|---|---|---|---|---|---|
| 30 | Bal. | 0.01 | 0.47 | 0.02 | ○ | 0.02 | 0.022 | - | - | - | - | ○ | 0.500 | ○ | 0.520 | - |
| 31 | Bal. | - | 0.32 | 0.02 | ○ | 0.045 | 0.025 | - | - | 0.01 | 0.01 | ○ | 0.340 | ○ | 0.385 | 0.02 |
| 32 | Bal. | - | 0.32 | 0.02 | ○ | 0.025 | 0.016 | - | - | - | - | ○ | 0.340 | ○ | 0.365 | - |
| 33 | Bal. | - | 0.05 | 0.25 | ○ | 0.07 | 0.019 | 0.04 | - | 0.03 | - | ○ | 0.300 | ○ | 0.370 | 0.07 |
| 34 | Bal. | 0.25 | 0.05 | - | ○ | 0.01 | 0.035 | - | - | - | - | ○ | 0.300 | ○ | 0.310 | - |
| 35 | Bal. | 0.03 | 0.22 | - | ○ | 0.03 | 0.010 | - | - | - | - | ○ | 0.250 | ○ | 0.280 | - |
| 40 | Bal. | - | 0.06 | 0.01 | × | 0.52 | 0.016 | - | - | - | - | ○ | 0.070 | ○ | 0.590 | - |
| 41 | Bal. | 0.30 | 0.02 | - | × | 0.53 | 0.020 | 0.02 | - | - | - | ○ | 0.320 | × | 0.850 | 0.02 |
| 42 | Bal. | - | 0.02 | - | ○ | 0.47 | 0.025 | - | - | - | - | × | 0.020 | ○ | 0.490 | - |
| 43 | Bal. | - | - | 0.04 | ○ | 0.35 | 0.017 | - | - | - | - | × | 0.040 | ○ | 0.390 | - |
| 44 | Bal. | - | 0.03 | 0.01 | ○ | 0.20 | 0.030 | - | - | - | - | × | 0.040 | × | 0.240 | - |
| 45 | Bal. | 0.01 | - | - | ○ | 0.08 | 0.021 | - | - | - | - | × | 0.010 | × | 0.090 | - |
| 46 | Bal. | 0.02 | 0.16 | 0.02 | ○ | 0.03 | 0.018 | - | - | - | - | ○ | 0.200 | × | 0.230 | - |
| 47 | Bal. | 0.30 | 0.02 | - | × | 0.005 | 0.022 | - | - | - | - | ○ | 0.320 | ○ | 0.325 | - |
| 48 | Bal. | 0.01 | 0.47 | 0.02 | × | 0.005 | 0.017 | - | - | - | - | ○ | 0.500 | ○ | 0.505 | - |
| 49 | Bal. | 0.79 | 0.01 | - | × | 0.005 | 0.019 | - | - | - | - | ○ | 0.800 | × | 0.805 | - |
| 50 | Bal. | 0.01 | - | 0.74 | ○ | 0.10 | 0.024 | - | 0.02 | - | - | ○ | 0.750 | × | 0.850 | 0.02 |
| 51 | Bal. | 0.03 | - | 0.07 | ○ | 0.10 | 0.015 | - | - | - | - | ○ | 0.100 | × | 0.200 | - |
| 24-2 | Bal. | - | 0.05 | 0.25 | ○ | 0.25 | 0.023 | 0.06 | 0.04 | - | - | ○ | 0.300 | ○ | 0.550 | 0.10 |
| 24-3 | Bal. | - | 0.05 | 0.25 | ○ | 0.25 | 0.023 | 0.07 | 0.04 | - | - | ○ | 0.300 | ○ | 0.550 | 0.11 |
| 27-2 | Bal. | 0.02 | 0.45 | 0.01 | ○ | 0.30 | 0.050 | - | - | - | - | ○ | 0.480 | ○ | 0.780 | 0.00 |
| 27-3 | Bal. | 0.02 | 0.45 | 0.01 | ○ | 0.30 | - | - | - | - | - | ○ | 0.480 | ○ | 0.780 | 0.00 |

EP 2 083 093 A1

In Table 1, "-" indicates that the content is less than 0.005 mass%. A case where the value "A+B+C" is 0.05 mass% or more is indicated by "O", and a case where the value "A+B+C" is less than 0.05 mass% is indicated by "x". A case where the value D is 0.01 to 0.5 mass% is indicated by "O", and a case where the value D is not 0.01 to 0.5 mass% is indicated by "×". A case where the value "A+B+C+D" is 0.25 to 0.8 mass% is indicated by "O", and a case where the value "A+B+C+D" is not 0.25 to 0.8 mass% is indicated by "×".

TABLE2

| Copper | 0.2% proof stress | | Tensile strength | | Elongation | | Workability | |
|---|---|---|---|---|---|---|---|---|
| alloy No. | | (MPa) | | (MPa) | | (%) | | |
| 1 | ○ | 60 | ○ | 250 | ○ | 45 | ○ | Good |
| 2 | ○ | 50 | ○ | 240 | ○ | 50 | ○ | Good |
| 3 | ○ | 80 | ○ | 280 | ○ | 40 | ○ | Good |
| 4 | ○ | 50 | ○ | 250 | ○ | 50 | ○ | Good |
| 5 | ○ | 70 | ○ | 270 | ○ | 40 | ○ | Good |
| 6 | ○ | 60 | ○ | 260 | ○ | 45 | ○ | Good |
| 7 | × | 40 | × | 230 | ○ | 45 | ○ | Good |
| 8 | ○ | 80 | ○ | 290 | × | 35 | × | Bad |
| 9 | × | 40 | × | 230 | ○ | 45 | ○ | Good |
| 10 | × | 40 | × | 230 | ○ | 45 | ○ | Good |
| 11 | ○ | 90 | ○ | 290 | × | 30 | × | Bad |
| 12 | ○ | 80 | ○ | 280 | × | 35 | × | Bad |
| 13 | × | 40 | × | 230 | ○ | 45 | ○ | Good |
| 14 | ○ | 100 | ○ | 300 | × | 35 | × | Bad |
| 20 | ○ | 50 | ○ | 250 | ○ | 43 | ○ | Good |
| 21 | ○ | 70 | ○ | 280 | ○ | 40 | ○ | Good |
| 22 | ○ | 50 | ○ | 240 | ○ | 45 | ○ | Good |
| 23 | ○ | 50 | ○ | 240 | ○ | 43 | ○ | Good |
| 24-1 | ○ | 60 | ○ | 260 | ○ | 43 | ○ | Good |
| 25 | ○ | 80 | ○ | 290 | ○ | 40 | ○ | Good |
| 26 | ○ | 80 | ○ | 290 | ○ | 40 | ○ | Good |
| 27-1 | ○ | 80 | ○ | 280 | ○ | 40 | ○ | Good |
| 28 | ○ | 80 | ○ | 290 | ○ | 40 | ○ | Good |
| 29 | ○ | 60 | ○ | 250 | ○ | 45 | ○ | Good |
| 30 | ○ | 50 | ○ | 250 | ○ | 48 | ○ | Good |
| 31 | ○ | 50 | ○ | 250 | ○ | 45 | ○ | Good |
| 32 | ○ | 50 | ○ | 240 | ○ | 48 | ○ | Good |
| 33 | ○ | 50 | ○ | 250 | ○ | 48 | ○ | Good |
| 34 | ○ | 50 | ○ | 250 | ○ | 48 | ○ | Good |
| 35 | ○ | 50 | ○ | 240 | ○ | 45 | ○ | Good |
| 40 | ○ | 55 | ○ | 250 | × | 38 | × | Bad |
| 41 | ○ | 80 | ○ | 280 | × | 38 | × | Bad |
| 42 | × | 45 | × | 230 | ○ | 45 | ○ | Good |

(continued)

| Copper | 0.2% proof stress | | Tensile strength | | Elongation | | Workability | |
|---|---|---|---|---|---|---|---|---|
| alloy No. | | (MPa) | | (MPa) | | (%) | | |
| 43 | × | 45 | × | 230 | ○ | 45 | ○ | Good |
| 44 | × | 40 | × | 230 | ○ | 45 | ○ | Good |
| 45 | × | 40 | × | 230 | ○ | 45 | ○ | Good |
| 46 | × | 40 | × | 230 | ○ | 48 | ○ | Good |
| 47 | × | 40 | × | 230 | ○ | 50 | ○ | Good |
| 48 | × | 45 | × | 230 | ○ | 50 | ○ | Good |
| 49 | ○ | 60 | ○ | 260 | × | 38 | × | Bad |
| 50 | ○ | 80 | ○ | 280 | × | 35 | × | Bad |
| 51 | × | 40 | × | 230 | ○ | 48 | ○ | Good |
| 24-2 | ○ | 70 | ○ | 270 | ○ | 43 | ○ | Good |
| 24-3 | ○ | 70 | ○ | 270 | ○ | 40 | ○ | Good |
| 27-2 | ○ | 80 | ○ | 280 | ○ | 40 | ○ | Good |
| 27-3 | ○ | 80 | ○ | 280 | ○ | 40 | ○ | Good |
| C1220 | | 40 | | 230 | | 50 | | Good |

In Table 2, a case where the 0.2% proof stress is 50 MPa or more is indicated by "O", and a case where the 0.2% proof stress is less than 50 MPa is indicated by "×". A case where the tensile strength is 240 MPa or more is indicated by "O", and a case where the tensile strength is less than 240 MPa is indicated by "×". A case where the elongation is 40% or more is indicated by "O", and a case where the elongation is less than 40% is indicated by "×". A case where the workability is "Good" is indicated by "O", and a case where the workability is "Bad" is indicated by "×".
Since the total content of Al, Sn, and Zn of the alloys 42 and 43 was low, the alloys 42 and 43 had a proof stress and a tensile strength lower than those of C1220 in spite of an increase in alloy production cost. Since the alloys 13, 47, and 48 had a low Zr content, the alloys 13, 47, and 48 had a proof stress and a tensile strength lower than those of C1220 in spite of an increase in alloy production cost. Since the total content of Al, Sn, Zn, and Zr of the alloys 46 and 51 was low, the alloys 46 and 51 had a proof stress and a tensile strength lower than those of C1220 in spite of an increase in alloy production cost. Since the total content of Al, Sn, and Zn and the total content of Al, Sn, Zn, and Zr of the alloys 7, 9, 10, 44, and 45 were low, the alloys 7, 9, 10, 44, and 45 had a proof stress and a tensile strength lower than those of C1220 in spite of an increase in alloy production cost.
Since the total content of Al, Sn, Zn, and Zr of the alloys 8, 11, 12, 41, 49, and 50 was low, the alloys 8, 11, 12, 41, 49, and 50 showed low ductility (workability: "Bad"). Since the alloy 40 had a low Zr content, the alloy 40 showed low ductility (workability: "Bad"). Since the Zr content and the total content of Al, Sn, Zn, and Zr of the alloy 14 were low, the alloy 14 showed low ductility (workability: "Bad").
The alloy 24-2 had an excellent proof stress, tensile strength, ductility, and workability. The alloy 24-2 had a higher proof stress and tensile strength as compared with the alloy 24-1 due to the addition of Fe and Ni.
The alloy 24-3 had an excellent proof stress, tensile strength, ductility, and workability. However, the alloy 24-3 had a ductility and workability lower than those of the alloy 24-1 to some extent since the total content of Al, Sn, Zn, and Zr was high.
The alloy 27-2 had an excellent proof stress, tensile strength, ductility, and workability. However, the alloy 27-2 had a thermal conductivity lower than that of the alloy 27-1 to some extent since the P content was high.
The alloy 27-3 had an excellent proof stress, tensile strength, ductility, and workability. However, the alloy 27-3 was insufficiently deoxidized as compared with the alloy 27-1 since the P content was low. Therefore, the alloy 27-3 showed hydrogen embrittlement due to the atmosphere (hydrogen gas) during furnace brazing when assembling a heat exchanger.

INDUSTRIAL APPLICABILITY

Since the seamless pipe copper alloy according to the present invention exhibits excellent workability, high strength, and high thermal conductivity, excellent heat exchanger pipes or refrigerant pipes of heat exchangers for air conditioners, refrigerators, and the like can be produced.

**Claims**

1.  A seamless pipe copper alloy comprising Zr and at least one of Al, Sn, and Zn, with the balance being Cu and unavoidable impurities, the Al content, the Sn content, the Zn content, and the Zr content of the seamless pipe copper alloy satisfying the following expressions (1), (2), and (3),

$$0.05 \leq A+B+C \qquad (1)$$

$$0.01 \leq D \leq 0.5 \qquad (2)$$

$$0.25 \leq A+B+C+D \leq 0.8 \qquad (3)$$

    wherein A represents the Al content (mass%), B represents the Sn content (mass%), C represents the Zn content (mass%), and D represents the Zr content (mass%).

2.  The seamless pipe copper alloy according to claim 1, the seamless pipe copper alloy further comprising at least one of Fe, Ni, Cr, and Co and having a total content of Fe, Ni, Cr, and Co of 0.1 mass% or less.

3.  The seamless pipe copper alloy according to claim 1 or 2, the seamless pipe copper alloy having a P content of 0.004 to 0.04 mass%.

**INTERNATIONAL SEARCH REPORT**

| International application No. |
| --- |
| PCT/JP2007/069639 |

A.  CLASSIFICATION OF SUBJECT MATTER
*C22C9/00*(2006.01)i, *C22C9/01*(2006.01)i, *C22C9/02*(2006.01)i, *C22C9/04*(2006.01)i, *C22F1/00*(2006.01)n, *C22F1/08*(2006.01)n

According to International Patent Classification (IPC) or to both national classification and IPC

B.  FIELDS SEARCHED

Minimum documentation searched (classification system followed by classification symbols)
C22C9/00-C22C9/10, C22F1/00, C22F1/08

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 54-61026 A  (Sumitomo Electric Industries, Ltd.), 17 May, 1979 (17.05.79), Page 2, lower left column, lines 9 to 20; table 1 (Family: none) | 1 |
| X | JP 63-130737 A  (Japan Energy Corp.), 02 June, 1988 (02.06.88), Page 3, upper left column, line 11 to upper right column, line 16; table 1 (Family: none) | 1 |
| X | JP 50-15210 B1  (Berry Metal Co.), 03 June, 1975 (03.06.75), Claims; table 1 & US 3615374 A          & US 3726673 A | 1 |

| ☒ | Further documents are listed in the continuation of Box C. | ☐ | See patent family annex. |
| --- | --- | --- | --- |

| | |
| --- | --- |
| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    19 December, 2007 (19.12.07) | Date of mailing of the international search report<br>    08 January, 2008 (08.01.08) |
| --- | --- |
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/069639

C (Continuation). DOCUMENTS CONSIDERED TO BE RELEVANT

| Category* | Citation of document, with indication, where appropriate, of the relevant passages | Relevant to claim No. |
|---|---|---|
| X | JP 2003-89832 A (Nippon Mining & Metals Co., Ltd.), 28 March, 2003 (28.03.03), Par. Nos. [0015] to [0023] (Family: none) | 1 |
| X | JP 7-284958 A (The Furukawa Electric Co., Ltd.), 31 October, 1995 (31.10.95), Par. Nos. [0011] to [0016] (Family: none) | 1,2 |
| X | JP 2005-96678 A (Mitsubishi Materials Corp.), 14 April, 2005 (14.04.05), Par. Nos. [0011] to [0022] (Family: none) | 2 |
| X | JP 10-183274 A (Nippon Mining & Metals Co., Ltd.), 14 July, 1998 (14.07.98), Par. Nos. [0027] to [0030] (Family: none) | 2 |
| X | JP 52-107227 A (The Furukawa Electric Co., Ltd., Furukawa Kinzoku Kogyo Kabushiki Kaisha), 08 September, 1977 (08.09.77), Page 2, upper right column, line 5 to lower left column, line 4; table 1 (Family: none) | 3 |
| Y | JP 54-92516 A (Mitsubishi Metal Corp.), 21 July, 1979 (21.07.79), Claims; tables 1, 2 (Family: none) | 3 |
| Y | JP 2004-292917 A (Kobe Steel, Ltd.), 21 October, 2004 (21.10.04), Claims 1 to 5; Par. Nos. [0020], [0021] (Family: none) | 3 |
| A | JP 6-184669 A (Mitsubishi Materials Corp.), 05 July, 1994 (05.07.94), Claims 1 to 8 & WO 1994/010352 A1 | 1-3 |
| A | JP 58-210139 A (Sumitomo Electric Industries, Ltd.), 07 December, 1983 (07.12.83), Claims; page 1, lower left column, line 17 to lower right column, line 9 (Family: none) | 1-3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000001728 A
- JP 10168531 A
- JP 2003268467 A
- JP 6058688 A